# EUROPEAN PATENT APPLICATION

(11) **EP 4 607 467 A1**
(43) Date of publication of application: **27.08.2025**
(21) Application number: 23881223.4
(22) Date of filing: 02.06.2023
(51) Int. Cl.: G06T 17/05, G06T 19/20

(54) **COLOR THREE-DIMENSIONAL MAP DISPLAY METHOD AND APPARATUS**

(30) Priority: 27.10.2022 CN 202211325855
(71) Applicant: Beijing Roborock Innovation Technology Co., Ltd., Beijing 102206 (CN)
(72) Inventor: WANG, Tiandong, Beijing 102206 (CN); NIU, Chenyu, Beijing 102206 (CN); YUAN, Jiabo, Beijing 102206 (CN); YU, Yihui, Beijing 102206 (CN); CHEN, Jiabo, Beijing 102206 (CN); ZHANG, Xiaobin, Beijing 102206 (CN); WU, Erqi, Beijing 102206 (CN)
(74) Representative: Manitz Finsterwald Patent- und Rechtsanwaltspartnerschaft mbB
(86) International application number: PCT/CN2023/098146
(87) International publication number: WO 2024/087632

(57) **Abstract**

The present disclosure provides a color three-dimensional map display method and apparatus. The method comprises: acquiring initial color three-dimensional map information of a space where a robot is located, wherein the space where the robot is located represents a space corresponding to an area that a robot sensor can detect (S 101); complementing the color three-dimensional map on the basis of the initial color three-dimensional map information, so as to infer and complement structural information and color information of an area that is not detected by the robot sensor (S102); and displaying a complemented color three-dimensional map obtained after completion (S103).

## Description

### CROSS REFERENCE TO RELATED APPLICATIONS

This application claims priority to Chinese Patent Application No. 202211325855.2 filed on October 27, 2022, the disclosure of which is herein incorporated as part of the present disclosure by reference in its entirety.

### TECHNICAL FIELD

The present disclosure relates to the technical field of robots, and in particular to a method and apparatus for displaying a color three-dimensional map.

### BACKGROUND

With the advancement of computer technology and artificial intelligence technology, a diverse array of robots equipped with intelligent systems have emerged, such as floor-sweeping machines, mopping robots, vacuum cleaning robots and lawn-mowing robots. These robots can automatically navigate within a region to perform tasks such as cleaning or debris removal without user operation. Such a robot can acquire corresponding information (e.g., RGB images, point cloud or the like) from its working region by means of a sensor to draw a color three-dimensional map of the region where the robot is located, and feed the drawn map back to a user, such that the user can grasp the map information of the region where the robot is located.

At present, due to factors such as restricted viewing angles or limited navigable regions of the robot, the color three-dimensional map constructed and fed back to the user by the robot is incomplete. For such an incomplete map, it is difficult for a user to identify obstacles and specific objects in region where the robot is located, making it difficult for the user to visually perceptive the working environment of the robot. As a result, the display effect of the color three-dimensional map and the user experience in using the robot are degraded.

### SUMMARY

In view of this, embodiments of the present disclosure provide a method and apparatus for displaying a color three-dimensional map, so as to solve the problems of degradation in a display effect of the color three-dimensional map and user experience caused by incomplete display of a three-dimensional map of a working environment of a robot in the related art.

In a first aspect of the embodiments of the present disclosure, a method for displaying a color three-dimensional map is provided. The method includes: acquiring initial color three-dimensional map information of a space where a robot is located, wherein the space where the robot is located represents a space corresponding to a region detectable by a robot sensor; completing the color three-dimensional map based on the initial color three-dimensional map information to perform inference-based completion on structural and color information of a region undetected by the robot sensor; and displaying the completed color three-dimensional map obtained after the completing.

In a second aspect of the embodiments of the present disclosure, an apparatus for displaying a color three-dimensional map is provided. The apparatus includes: an acquisition module configured to acquire initial color three-dimensional map information of a space where a robot is located, wherein the space where the robot is located represents a space corresponding to a region detectable by a robot sensor; a completion module configured to complete the color three-dimensional map based on the initial color three-dimensional map information to perform inference-based completion on structural and color information of a region undetected by the robot sensor; and a display module configured to display the completed color three-dimensional map obtained after the completing.

In a third aspect of the embodiments of the present disclosure, an electronic device is provided. The electronic device includes a processor, and a memory for storing a computer program, wherein the computer program, when executed by the processor, implements the method of any one of the above embodiments.

In a fourth aspect of the embodiments of the present disclosure, a computer-readable storage medium is provided. The computer-readable storage medium stores a computer program, wherein the computer program, when executed by a processor, implements the method of any one of the above embodiments.

At least one of the above technical solutions used in the embodiments of the present disclosure can achieve beneficial effects as follows.

The initial color three-dimensional map information of a space where a robot is located is acquired, wherein the space where the robot is located represents a space corresponding to a region detectable by a robot sensor; a color three-dimensional map is completed based on the initial color three-dimensional map information to perform inference-based completion on structural and color information of a region undetected by the robot sensor; and the completed color three-dimensional map obtained after the completing is displayed. In this way, the present disclose enables complete display of the color three-dimensional map corresponding to the working environment of the robot, allowing a user to visually perceptive the working environment of the robot, such that the display effect of the color three-dimensional map and the user experience in using the robot are improved.

### BRIEF DESCRIPTION OF THE DRAWINGS

For clearer description of the technical solutions in the embodiments of the present disclosure, the following briefly introduces the accompanying drawings required to be used in the description of the embodiments or the related art. Obviously, the accompanying drawings in the following description show merely some embodiments of the present disclosure, and those of ordinary skill in the art may still derive other drawings from these accompanying drawings without creative efforts.
FIG. 1 is a schematic flowchart of a method for displaying a color three-dimensional map according to an embodiment of the present disclosure;
FIG. 2 is a schematic 3D diagram of a reconstructed initial color three-dimensional map according to an embodiment of the present disclosure;
FIG. 3 is a schematic 3D diagram of a completed color three-dimensional map according to an embodiment of the present disclosure;
FIG. 4 is a schematic 3D diagram of a segmented and colored color three-dimensional map according to an embodiment of the present disclosure;
FIG. 5 is a schematic structural diagram of an apparatus for displaying a color three-dimensional map according to an embodiment of the present disclosure; and
FIG. 6 is a schematic structural diagram of an electronic device according to an embodiment of the present disclosure.

### DETAILED DESCRIPTION

For thorough understanding of the embodiments of the present disclosure, specific details such as specific system structures and techniques are presented in the following description for a purpose of illustration, rather than limitation. However, those skilled in the art should understand that the present disclosure may also be implemented in other embodiments that do not include these specific details. In other cases, the detailed description of well-known systems, apparatuses, circuits, and methods is omitted to avoid interfering with the description of the disclosure by unnecessary details.

As mentioned in the background art, with the advancement of computer technology and artificial intelligence technology, a diverse array of robots equipped with intelligent systems have emerged, such as floor-sweeping machines, mopping robots, vacuum cleaning robots and lawn-mowing robots. These robots can automatically navigate within a region to perform tasks such as cleaning or debris removal without user operation. Such a robot is typically provided with sensors such as an RGB camera, a depth camera and a laser radar. In a working process, the robot acquires corresponding information (e.g., RGB images, point cloud or the like) in its working region by means of the sensors to draw a color three-dimensional map of the region where the robot is located, and feed the drawn map back to a user, such that the user can grasp the map information of the region where the robot is located.

In the related art, due to factors such as restricted viewing angles or the limited navigable regions of the robot, the color three-dimensional map constructed and fed back to the user by the robot is incomplete. For such an incomplete map, it is difficult for a user to identify obstacles and specific objects in the region where the robot is located, making it difficult for the user to visually perceptive the working environment of the robot. As a result, the display effect of the color three-dimensional map and the user experience in using the robot are degraded. Meanwhile, the color three-dimensional map constructed by an existing robot lacks labels for object categories. As a result, the object in which the user is interested cannot be highlighted, making it impossible for the user to identify the object more directly.

In view of the problems existing in the related art described above, it is urgent to provide a method for displaying a color three-dimensional map, whereby a color three-dimensional map constructed by a robot can be completed in structure and color, and optionally, the category information of an object in the completed color three-dimensional map can be labelled.

In view of this, an embodiment of the present disclosure provides a method for displaying a color three-dimensional map, in which the initial color three-dimensional map information of a space where a robot is located is acquired; the structural and color information of a region undetected by a robot sensor is inferred at preset accuracy by using a color three-dimensional map completion algorithm to obtain a completed color three-dimensional map; the completed color three-dimensional map is rendered and displayed on a terminal to enable a user to visually perceive the working environment of the robot, such that the display effect of the color three-dimensional map and the user experience in using the robot are improved.

It should be noted that the robot in the embodiments of the present disclosure includes, but is not limited to, an automatic cleaning robot, such as a floor-sweeping robot, a mopping robot and an integrated sweeping and mopping robot. The working scene of the robot in the embodiments of the present disclosure is not limited to an automatic cleaning scene, and the working scenes corresponding to other different types of robots are also applicable to the present disclosure. In the embodiments of the present disclosure, the space where the robot is located may be an indoor space, an outdoor space, or any other space (such as a roof space). The type and working scene of the above robot and the space in which the above robot is located do not impose limitations on the technical solutions of the present disclosure.

The implementation of the method for displaying a color three-dimensional map will be illustrated in detail below in combination with the accompanying drawings and specific embodiments.

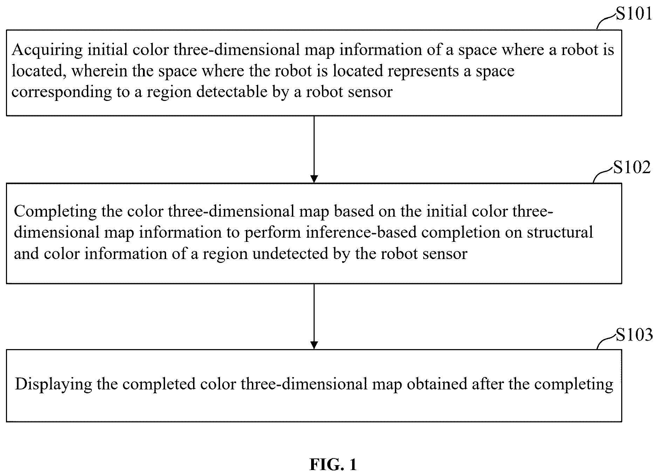

FIG. 1 is a schematic flowchart of a method for displaying a color three-dimensional map according to an embodiment of the present disclosure. The method for displaying the color three-dimensional map in FIG. 1 may be executed by a computer program mounted in a robot or terminal. As shown in FIG. 1, the method for displaying the color three-dimensional map may include:
S101, initial color three-dimensional map information of a space where a robot is located, is acquired, wherein the space where the robot is located represents a space corresponding to a region detectable by a robot sensor;
S102, the color three-dimensional map is completed based on the initial color three-dimensional map information to perform inference-based completion on structural and color information of a region undetected by the robot sensor; and
S103, the completed color three-dimensional map obtained after the completing is displayed.

Specifically, in an embodiment of the present disclosure, the robot may be a sweeping machine, a mopping robot or an integrated sweeping and mopping robot. In a possible application scene of the embodiment of the present disclosure, when the robot performs cleaning or mopping in a working region, the working region is scanned using sensors such as an RGB camera, a depth camera (optional) and a laser radar (optional) that are mounted in the robot to acquire information, the color three-dimensional map of a space where the robot is located is reconstructed based on the acquired information, the reconstructed color three-dimensional map is completed, and the completed color three-dimensional map is displayed. This application scene is only an optional scene of the present disclosure and does not impose limitations on the technical solution of the present disclosure.

Further, before completing the color three-dimensional map in the region where the robot is located, it is necessary to first acquire the initial color three-dimensional map information of the space where the robot is located; and by taking the initial color three-dimensional map information as the input of a color three-dimensional map completion algorithm model or as the input of an integrated construction and completion algorithm model, the initial color three-dimensional map information is processed by using a pre-trained model to obtain the completed color three-dimensional map. The specific content and the acquisition method of the initial color three-dimensional map information will be described in detail below in combination with specific embodiments.

In some embodiments, the initial color three-dimensional map information includes: an initial color three-dimensional map of the space where the robot is located and/or information required for reconstructing the initial color three-dimensional map of the space where the robot is located.

Specifically, in an embodiment of the present disclosure, the initial color three-dimensional map information includes information in at least one of the following two aspects: in one aspect, the information refers to an initial color three-dimensional map of the space where the robot is located, i.e., acquiring the initial color three-dimensional map of the space where the robot is located; and in the other aspect, the information is that required for reconstructing the initial color three-dimensional map of the space where the robot is located, i.e., relevant information for constructing the initial color three-dimensional map.

It should be noted that different pieces of initial color three-dimensional map information correspond to different color three-dimensional map completion algorithms. Therefore, the following illustrates the processes of completing a color three-dimensional map using two different pieces of initial color three-dimensional map information, respectively.

In some embodiments, acquiring the information required for reconstructing the initial color three-dimensional map of the space where the robot is located includes:
acquiring an RGB image taken by the robot using an RGB camera, and acquiring pose information corresponding to the RGB camera;
or, acquiring an RGB image taken by the robot using an RGB camera and acquiring pose information corresponding to the RGB camera, and acquiring a depth image taken by using a depth camera and pose information corresponding to the depth camera;
or, acquiring an RGB image taken by the robot using an RGB camera and acquiring pose information corresponding to the RGB camera, and acquiring point cloud information measured by a radar and pose information corresponding to the radar.

Specifically, the information for reconstructing the initial color three-dimensional map of the space where the robot is located includes at least the RGB image and the pose information corresponding to the RGB camera. In addition, optionally, the depth image and the pose information corresponding to the depth camera may also be acquired. In addition, optionally, the point cloud information and the pose information corresponding to the radar may also be acquired.

In some embodiments, completing the color three-dimensional map based on the information required for reconstructing the initial color three-dimensional map of the space where the robot is located includes:
processing, by using a pre-configured first completion algorithm model, the information required for reconstructing the initial color three-dimensional map of the space where the robot is located to perform inference-based completion on the structural and color information of the region undetected by the robot sensor, and rendering a three-dimensional scene after the inference-based completion to obtain the completed color three-dimensional map.

Specifically, in an embodiment of the present disclosure, the first completion algorithm model is a prediction model obtained by model training based on an integrated construction and completion algorithm. In a specific embodiment, the integrated construction and completion algorithm may adopt an NERF-VAE method, in which by using a pre-trained NERF-VAE neural network model, the RGB image taken by the robot using the RGB camera and the pose information corresponding to the RGB camera, the RGB image and the pose information are input into the pre-trained NERF-VAE neural network model, and then the scene is rendered.

Here, the NERF-VAE neural network model is a 3D scene generation model that combines a neural radiance field (NeRF) with differentiable volume rendering and a geometric structure. The NeRF-VAE model has the following advantages: the use of amortized inference avoids the need for costly optimization from scratch for each new scene; by learning shared information sharing between multiple scenes, the reconstruction of unseen scenes from fewer input views is achieved; compared with the existing convolutional generation models (such as GQN) for view synthesis, better generalization is achieved when out-of-distribution camera views are evaluated; and NeRF-VAE is the only variant of amortized NeRF, and employs the compact scene representation in the form of latent variables, thereby addressing input uncertainty.

In some embodiments, acquiring the initial color three-dimensional map of the space where the robot is located includes:
acquiring an RGB image sequence consisting of RGB images taken by the robot using an RGB camera, and determining pose information corresponding to the RGB camera mounted in the robot; and
reconstructing the initial color three-dimensional map of the space where the robot is located based on the RGB image sequence and the pose information.

Specifically, in an embodiment of the present disclosure, the initial color three-dimensional map of the space where the robot is located may be acquired by: acquiring an RGB image sequence consisting of RGB images taken by the RGB camera when the robot is in motion, determining a camera pose corresponding to the RGB camera on the robot by executing the simultaneous localization and mapping algorithm (SLAM algorithm), and reconstructing the initial color three-dimensional map of the space where the robot is located based on the RGB image sequence and the pose information of the RGB camera.

Further, the SLAM Simultaneous Localization and Mapping) is an algorithm mainly used to address localization and map construction when the robot moves in an unknown environment. With the SLAM algorithm, the robot can construct a 3D map of its surrounding in real time, and track the position and direction of the camera in the robot at the same time. In practical applications, in addition to the use of the SLAM algorithm, the traditional SFM (structure-from-motion) algorithm may also be used for map reconstruction. The SFM algorithm is an off-line algorithm for three-dimensional reconstruction based on various collected sequence of images, and can restore the three-dimensional structure of an object from motion (a set of pictures taken at different times). The main process of the SFM algorithm includes: extracting and matching feature points, acquiring a fundamental matrix F, decomposing an essential matrix E to obtain R and T, and performing triangulation to obtain a sparse point cloud.

Additionally, in addition to the above SLAM and SFM algorithms, a pre-trained neural network (e.g., Atlas) may be used to reconstruct the initial color three-dimensional map. In the present disclosure, there is no improvement made to the processes of the above algorithms and the structure of the neural network itself, and the implementation processes of the above algorithms are thus not described in detail.

In some embodiments, acquiring the initial color three-dimensional map of the space where the robot is located includes:
acquiring an RGB image sequence consisting of RGB images taken by the robot using an RGB camera, determining pose information corresponding to the RGB camera mounted in the robot, and acquiring at least one of a depth image, point cloud information, accelerometer-collected information, and gyroscope-collected information to reconstruct the initial color three-dimensional map of the space where the robot is located.

Specifically, in another embodiment, in addition to acquiring the RGB image sequence consisting of the RGB images taken by the RGB camera when the robot is in motion and the pose information of the RGB camera, at least one of the following information may be acquired: a depth image, point cloud information, accelerometer-collected information, and gyroscope-collected information. Here, the depth image is an image taken by a depth camera mounted in the robot, the point cloud information is information obtained by the laser radar scanning, and the accelerometer-collected information and the gyroscope-collected information are those collected by an accelerometer and a gyroscope (IMU) on the robot.

Further, when the acquired information further includes the depth image taken by the depth camera, the Kinect Fusion algorithm may also be used to reconstruct the initial color three-dimensional map. The Kinect Fusion algorithm is a real-time reconstruction, tracking and reconstruction algorithm based on an RGB-D camera (i.e., a stereoscopic color camera, which can restore a color stereoscopic data space in real time), and it is suitable for any environmental lighting. The Kinect Fusion algorithm adopts a point cloud fusion method based on the TSDF (truncated signed distance function) model, allowing a constructed point cloud model with minimal redundancy.

The Kinect Fusion algorithm allows for reconstruction of a 3D scene corresponding to the initial color 3D map by matching, localizing and fusing depth data collected by Kinect, and its algorithm process mainly includes the following four parts: (1) depth data processing: original depth data is converted into a 3D point cloud to obtain the 3D coordinates and normal vectors of vertices in the point cloud; (2) camera tracking: ICP matching is performed between the 3D point cloud of a current frame and a predicted 3D point cloud generated by an existing model to calculate a camera pose for the current frame; (3) point cloud fusion: the 3D point cloud of the current frame is fused into the existing model by using the TSDF point cloud fusion algorithm based on the current camera pose; and (4) scene rendering: an environmental point cloud observed by the camera currently is predicted using a ray tracing method based on the existing model and the current camera pose.

Additionally, in addition to the Kinect Fusion algorithm, the neural radiance field algorithm (NeRF algorithm) may also be used, by which the 3D scene under different 2D perspectives is directly rendered to obtain the 3D scene corresponding to the initial color 3D map under different 2D perspectives. In the present disclosure, there is no improvement made to the processes of the Kinect Fusion algorithm and the NeRF algorithm, and their implementation processes are thus not described in detail here. It should be understood that any algorithm allowing for three-dimensional map reconstruction is applicable to the present disclosure.

It should be noted that, in an embodiment of the present disclosure, the operation of completing the color three-dimensional map may be as follows: when in a working process, the robot acquires environmental information (such as RGB images, depth images, point cloud information and the like) in a detectable region while navigating, reconstructs an initial color three-dimensional map in real time by using the environmental information in the detectable region, and performs completion based on the reconstructed initial color three-dimensional map. In this case, the inputs for the map reconstruction algorithm include the RGB image sequence, the pose information of the camera and other optional information (depth images, point cloud information, accelerometer-collected information, gyroscope-collected information and the like), as acquired in real time by the robot in a motion process. That is, in the scene where the robot completes the map in real time, the reconstruction and completion of the initial color three-dimensional map by the robot are both based on the information acquired in real time.

In addition to the above cases, in an embodiment of the present disclosure, the operation of completing the color three-dimensional map may also be as follows: after the robot finishes its work, the initial color three-dimensional map is reconstructed and completed based on the RGB image sequence, the pose information of the camera and other optional information (depth images, point cloud information, accelerometer-collected information, gyroscope-collected information and the like), as acquired by the robot in a historical motion process (such as the last task execution process). In this case, the inputs for the map reconstruction algorithm include the information acquired in the historical motion process (rather than in real time), in which case the robot may complete all the color three-dimensional maps in one step, i.e., achieving the global completion of the three-dimensional map. In a real-time case, however, the operation of completing the three-dimensional map can only perform completion by region based on the information acquired by the robot.

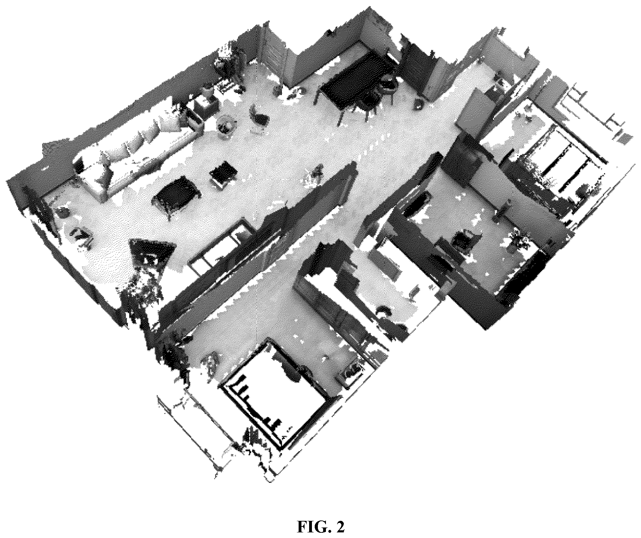

FIG. 2 is a schematic 3D diagram of a reconstructed initial color three-dimensional map according to an embodiment of the present disclosure. As shown in FIG. 2, the reconstructed initial color three-dimensional map includes the following.

In some embodiments, the completed color three-dimensional map includes structural and color information corresponding to the initial color three-dimensional map, and structural and color information in the region undetected by the robot sensor.

Specifically, after reconstruction of the initial color three-dimensional map of the space where the robot is located, the initial color three-dimensional map includes only part or all of the structural information and part or all of the color information corresponding to the structural information in the region detectable by the robot sensor, excluding all the structural information and all the color information corresponding to the structural information in the region undetected by the robot sensor.

In some embodiments, completing the color three-dimensional map based on the initial color three-dimensional map of the space where the robot is located includes:
processing, by using a pre-configured second completion algorithm model, the reconstructed initial color three-dimensional map to perform completion and inference on the structural and color information of the region undetected by the robot sensor, thereby obtaining the completed color three-dimensional map.

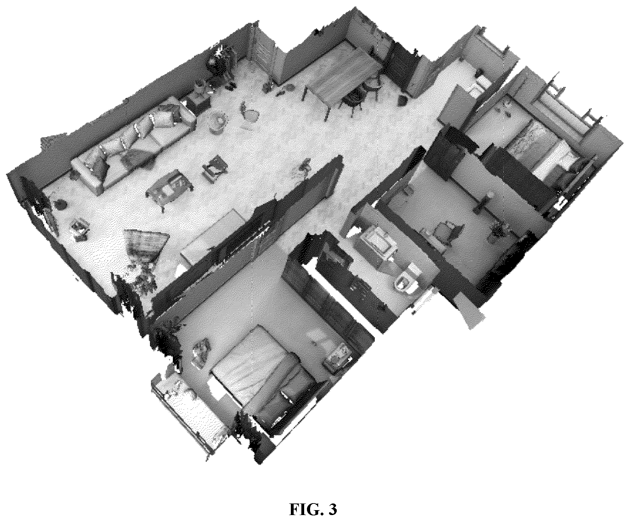

Specifically, in an embodiment of the present disclosure, after reconstruction of the initial color three-dimensional map, the reconstructed initial color three-dimensional map is input into a pre-configured color three-dimensional map completion algorithm model (i.e., the second completion algorithm model), by which the three-dimensional map is completed. In practical applications, the color three-dimensional map completion algorithm may be regarded as an instruction set that takes the initial color three-dimensional map taken as input information (the input may not be unique), processes the input information, and outputs the completed color three-dimensional map within a limited time. In combination with the accompanying drawings and specific embodiments, the completion principle of the color three-dimensional map completion algorithm and the completed color three-dimensional map are described below in detail. FIG. 3 is a schematic 3D diagram of the completed color three-dimensional map according to an embodiment of the present disclosure. As shown in FIG. 3, completing the color three-dimensional map includes the following content.

In a specific embodiment, the second completion algorithm model in an embodiment of the present disclosure is a prediction model obtained by model training based on the color three-dimensional map completion algorithm. In a specific embodiment, for the color three-dimensional map completion algorithm mode, structural completion may first be performed using the neural network SG-NN, followed by colorization via the Texture Fields algorithm; alternatively, the SPSG algorithm is directly used for competition. The following takes the SPSG algorithm-based completion of the color three-dimensional map as an example to illustrate its fundamental principle.

The fundamental working principle of the SPSG algorithm for color three-dimensional map completion includes: using an instruction set to infer the geometric structural and color information of the region undetected by the robot sensor with specified accuracy, so as to obtain the completed color three-dimensional map. Here, the SPSG algorithm may include learning in a self-supervised manner to infer the geometric structural and color information of an unobserved scene so as to generate a high-quality color three-dimensional scene model based on RGB-D scanning observation. This self-supervised manner establishes associations between incomplete RGB-D scans and their complete counterparts, thereby simultaneously reconstructing both geometry and color. It is worth noting that the SPSG algorithm does not rely on 3D reconstruction loss to provide information for 3D geometry and color reconstruction, but proposes 2D rendering-based adversarial and perceptual losses to achieve high-resolution and high-quality color reconstruction of a scene. In this way, the high-resolution and self-consistent signals from a single raw RGB-D frame are used, such that the 2D signals can be directly used to provide information for 3D scene generation, thereby achieving the high-quality color reconstruction of the three-dimensional scene.

In other embodiments, the reconstructed initial color three-dimensional map is completed by using the SPSG algorithm according to the above embodiment to obtain the completed color three-dimensional map. The embodiment of the present disclosure further provides another implementation for completing the initial color three-dimensional map. In this implementation, the Scan2CAD algorithm is used for object identification, the Bundle Fusion algorithm is used to calculate a camera pose corresponding to an RGBD image, and the Texture Fields algorithm is used to make predictions for the RGBD image to obtain the color information of all objects in the RGBD image, such that the completion of the initial color three-dimensional map is achieved. The whole process of the implementation of completing the initial color three-dimensional map is described below in detail in combination with the specific embodiments. Specifically, this process includes:
(1) first, acquiring RGBD information for reconstructing an initial color three-dimensional map, and reconstructing an RGBD image corresponding to the initial color three-dimensional map based on the RGBD information;
(2) identifying the category, pose and dimensional information corresponding to objects existing in the RGBD image using the Scan2CAD or Scene2CAD algorithm, and retrieving a model corresponding to each object from a preset three-dimensional CAD model database;
(3) integrating the CAD model retrieved for each object into an empty three-dimensional map based on the pose information (including position and orientation) of each object to form an uncolored three-dimensional map;
(4) calculating a camera pose corresponding to the RGBD image using the Bundle Fusion algorithm, and acquiring the RGBD image taken for at least one object from the RGBD image in (1) above using the bounding volume hierarchy (BVH) tree) and occlusion culling algorithms (for example, occlusion culling algorithms) based on the camera pose corresponding to the RGBD image and the identified objects; and
(5) making predictions for each identified object and the image corresponding to this object using the Texture Fields algorithm to obtain the color information of each object, and then coloring each object using the color information.

In this way, the completed color three-dimensional map is obtained.

It should be noted that the principle of the implementation of completing the initial color three-dimensional map with respect to (1) to (5) above is based on the fact that the CAD model in the color three-dimensional map is inherently complete. Therefore, in a case of an incomplete color three-dimensional map, the CAD model in the color three-dimensional map is completed structurally, and then in color by using the Texture Fields algorithm, such that the completed color three-dimensional map can be achieved.

In practical applications, the completed color three-dimensional map includes the prediction for the color three-dimensional map of the region undetected by the robot. That is, the completed color three-dimensional map not only includes part or all of the structural information and the color information corresponding to the structural information, of the initial color three-dimensional map, but also includes the corresponding structural information, and the color information corresponding to the structural information, of the three-dimensional map of the region undetected by the robot sensor but inferable with a specified accuracy using the color three-dimensional map completion algorithm.

In some embodiments, the method further includes: performing regional segmentation on elements in the completed color three-dimensional map such that different regions after segmentation each include an object, a category of objects or several categories of objects, assigning category labels to objects in the different regions to obtain object category information in the completed color three-dimensional map, and coloring elements in the different regions to obtain colors corresponding to the objects in the different regions in the completed color three-dimensional map.

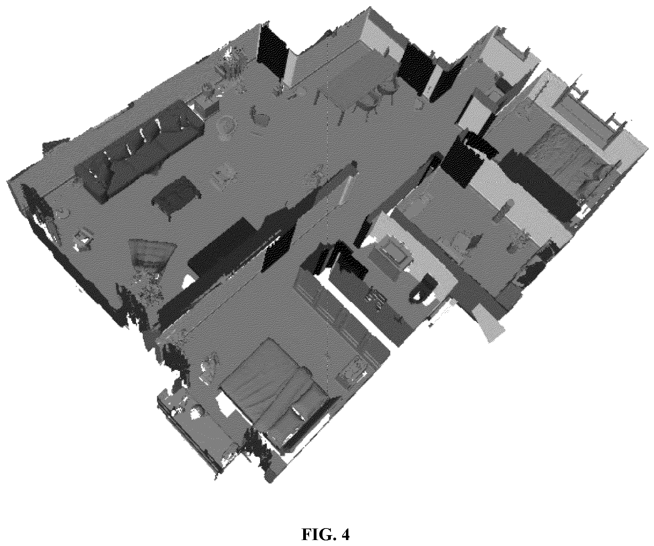

Specifically, after the completed color three-dimensional map is obtained using the algorithms and processing flows in the aforementioned embodiments, the elements (for example, points, planes, voxels, fragments and the like) on the completed color three-dimensional map may be regionally segmented by a segmentation algorithm, and the elements in different regions after the segmentation may be colored. The regional segmentation algorithm used and the details of segmenting and coloring of the color three-dimensional map will be illustrated below in combination with the accompanying drawings and specific embodiments. FIG. 4 is a schematic 3D diagram of a segmented and colored color three-dimensional map according to an embodiment of the present disclosure. As shown in FIG. 4, the segmentation algorithm and the details of segmenting and coloring of the color three-dimensional map include the following content.

The completed color three-dimensional map is regionally segmented by means of the regional segmentation algorithm, such that different regions in the completed color three-dimensional map include, within a specified accuracy, only one object, or a category of objects, or pre-specified categories of objects, or other categories of objects excluding the pre-specified categories of objects. In practical applications, the different regions after segmentation may either be connected or disconnected.

In a specific embodiment, the regional segmentation algorithm in the present disclosure may be Mix3D, BPNet or other algorithms. Preferably, the Mix3D algorithm is used in the present disclosure to perform regional segmentation on the elements in the completed color three-dimensional map. Here, Mix3D is a data augmentation technique for segmenting large-scale three-dimensional scenes, by which global textures and local geometry can be balanced. By applying Mix3D to the recent point-based and voxel-based three-dimensional models, the segmentation performance can be continuously improved over three-dimensional large indoor and outdoor datasets. After the completed color three-dimensional map is regionally segmented using the Mix3D, automatic category labelling is performed on the objects in the completed color three-dimensional map, thereby outputting the corresponding category information of each object.

Further, the elements in different regions after segmentation are colored to allow the objects in different regions to present corresponding colors. For example, in the segmented and colored color three-dimensional map shown in FIG. 4, in the living room, the "sofa" is rendered in pink and the "dining table" in blue, and in the bedroom, the "bed" is rendered in green. By assigning the category labels to the objects in different regions and presenting the objects in different colors, a user can visually perceive the object information in the working region of the robot, facilitating more direct object identification by the user.

In some embodiments, the method further includes: integrating a three-dimensional model of the robot in the completed color three-dimensional map based on position and orientation information of the robot, and displaying the three-dimensional model of the robot and the completed color three-dimensional map at a consistent scale.

Specifically, in addition to the regional segmentation and coloring of the completed color three-dimensional map, it is possible to integrate the three-dimensional model of the robot in the completed color three-dimensional map based on the position and orientation information of the robot, the corresponding position and orientation are maintained, and the three-dimensional model of the robot and the completed color three-dimensional map are displayed at a consistent scale. For example, in a specific embodiment, taking a mobile phone as a display device by way of example, a three-dimensional scene object is first created in an application installed on the mobile phone; then, the vertices and face data of a pre-designed robot three-dimensional model are added to the three-dimensional scene object; and the position and orientation of the robot three-dimensional model are set to achieve the integration of the scene into the robot three-dimensional model.

In some embodiments, the present disclosure further includes displaying the completed color three-dimensional map modified by one or a combination of several of modification modes, wherein the modification modes includes:
manually setting a color for the completed color three-dimensional map, or automatically setting a color for the completed color three-dimensional map based on a preset color scheme;
generating a decal using a preset pattern or a custom pattern, and displaying the decal in the completed color three-dimensional map;
adding a navigable region, a non-navigable region or a virtual wall for the robot to the completed color three-dimensional map, and displaying the navigable region, the non-navigable region or the virtual wall in the completed color three-dimensional map;
setting an automatically time-varying color scheme for the completed color three-dimensional map according to preset color schemes corresponding to different times, such that all or some of the regions in the completed color three-dimensional map automatically change in color according to the color scheme; and
setting a camera trajectory in the completed color three-dimensional map or employing a motion trajectory of the robot, rendering the completed color three-dimensional map according to a pose and an intrinsic parameter of the camera on the camera trajectory or on the motion trajectory to obtain two-dimensional images rendered based on the trajectory, and playing the two-dimensional images sequentially.

Specifically, in an embodiment of the present disclosure, after the completed color three-dimensional map is obtained, the completed color three-dimensional map may also be displayed after modification. The above provides several modification modes in the embodiments of the present disclosure. In practical applications, one of the above modification modes may be used to modify the completed color three-dimensional map, or a combination of several of the above modification modes may be used to modify the completed color three-dimensional map. The details of the above modification modes will be illustrated below in detail. It should be understood that the specific modification modes do not impose limitations on the technical solutions of the present disclosure.

In a first modification mode, a user may set a color for the completed color three-dimensional map, in which case the same color may be set for the entire map, or different colors may be set for different regions, or a preset color scheme stored in the robot may be selected to automatically apply a desired display color to the completed color three-dimensional map based on the selected color scheme.

In a second modification mode, a user may select an image stored in the robot in advance or added by the user to form a decal, and apply it into the completed color three-dimensional map according to robot presetting or user preference. That is, the user may select a preset or custom pattern, and project the pattern as a decal onto the completed color three-dimensional map.

In a third modification mode, a user may add a navigable region, an non-navigable region, or a virtual wall and other region control for the robot to the completed color three-dimensional map, and then display the region or virtual wall added by the user in the completed color three-dimensional map. Here, the virtual wall may be the one preventing the robot from entering a certain region.

In a fourth modification mode, a user may set the completed color three-dimensional map with an automatically condition-driven color scheme, including: for example, a color scheme set corresponding to each day, each week, each month, each quarter, or each season, or a color scheme corresponding to a current date based on the local current date displayed on the robot's operational location.

In a fifth modification mode, a user may set the completed color three-dimensional map to change colors of some category regions based on an automatically changeable color scheme. For example, the plants in the map may present colors according to the seasons, such as green in summer, yellow in autumn or the like.

In a sixth modification mode, a user may set a camera trajectory in the completed color three-dimensional map or employs an existing motion trajectory of the robot, acquire the pose and intrinsic parameters of the camera on the trajectory based on the motion trajectory, render the completed color three-dimensional map to obtain 2D images rendered based on the trajectory, and play the 2D images sequentially on a display device. In practical applications, rendering may be performed by rasterization, ray tracing, NeRF or the like.

In some embodiments, the method further includes: displaying the completed color three-dimensional map in two dimensions based on a preset plane of section or a user-defined plane of section.

Specifically, in an embodiment of the present disclosure, the completed color three-dimensional map may also be displayed in two dimensions, and the plane of section for two-dimensional display may be displayed according to the plane of section preset by the robot, or according to the plane of section set by the user. For example, the vertical axis of the completed color three-dimensional map may be directly set to Z = 0.1 m, in which case the intersection plane with the three-dimensional map may be used as the plane of section for the two-dimensional display.

According to the technical solution provided in the embodiments of the present disclosure, the initial color three-dimensional map information of the space where the robot is located is acquired; the structural and color information of the region undetected by the robot sensor is inferred at preset accuracy by using the integrated construction and completion algorithm or the color three-dimensional map completion algorithm model to obtain the completed color three-dimensional map; the completed color three-dimensional map is rendered and displayed on the terminal to enable the user to visually perceive the working environment of the robot, such that the display effect of the color three-dimensional map and the user experience in using the robot are improved in the embodiments of the present disclosure.

Described below are apparatus embodiments of the present disclosure, which can be used to implement the method embodiments of the present disclosure. For details not disclosed in the apparatus embodiments of the present disclosure, a reference can be made to the method embodiments of the present disclosure.

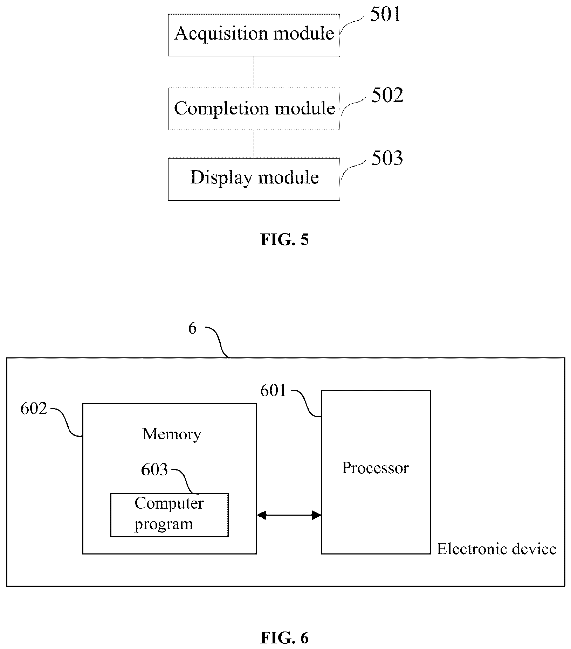

FIG. 5 is a schematic structural diagram of an apparatus for displaying a color three-dimensional map according to an embodiment of the present disclosure. As shown in FIG. 5, the apparatus for displaying the color three-dimensional map includes:
an acquisition module 501 configured to acquire initial color three-dimensional map information of a space where a robot is located, wherein the space where the robot is located represents a space corresponding to a region detectable by a robot sensor;
a completion module 502 configured to complete the color three-dimensional map based on the initial color three-dimensional map information to perform inference-based completion on structural and color information of a region undetected by the robot sensor; and
a display module 503 configured to display the completed color three-dimensional map obtained after the completing.

In some embodiments, the acquisition module 501 in FIG. 5 acquires an RGB image taken by the robot using an RGB camera, and acquires pose information corresponding to the RGB camera; or, acquires an RGB image taken by the robot using an RGB camera, acquires pose information corresponding to the RGB camera, and acquires a depth image taken by using a depth camera and pose information corresponding to the depth camera; or, acquires an RGB image taken by the robot using an RGB camera, acquires pose information corresponding to the RGB camera, and acquires point cloud information measured by a radar and pose information corresponding to the radar.

In some embodiments, the completion module 502 in FIG. 5 processes, by using a pre-configured first completion algorithm model, the information required for reconstructing the initial color three-dimensional map of the space where the robot is located to perform inference-based completion on the structural and color information of the region undetected by the robot sensor, and renders a three-dimensional scene after the inference-based completion to obtain the completed color three-dimensional map.

In some embodiments, the acquisition module 501 in FIG. 5 acquires an RGB image sequence consisting of RGB images taken by the robot using an RGB camera, and determines pose information corresponding to the RGB camera mounted in the robot, to reconstruct the initial color three-dimensional map of the space where the robot is located based on the RGB image sequence and the pose information.

In some embodiments, the acquisition module 501 in FIG. 5 acquires an RGB image sequence consisting of RGB images taken by the robot using an RGB camera, determines pose information corresponding to the RGB camera mounted in the robot, and acquires at least one of a depth image, point cloud information, accelerometer-collected information, and gyroscope-collected information, to reconstruct the initial color three-dimensional map of the space where the robot is located.

In some embodiments, the completion module 502 in FIG. 5 processes, by using a pre-configured second completion algorithm model, the reconstructed initial color three-dimensional map to perform completion and inference on the structural and color information of the region undetected by the robot sensor, thereby obtaining the completed color three-dimensional map.

In some embodiments, the display module 503 in FIG. 5 performs regional segmentation on elements in the completed color three-dimensional map such that different regions after segmentation each include an object, a category of objects or several categories of objects, assigns category labels to objects in the different regions to obtain object category information in the completed color three-dimensional map, and colors elements in the different regions to obtain colors corresponding to the objects in the different regions in the completed color three-dimensional map.

In some embodiments, the display module 503 in FIG. 5 integrates a three-dimensional model of the robot in the completed color three-dimensional map based on position and orientation information of the robot, and displays the three-dimensional model of the robot and the completed color three-dimensional map at a consistent scale.

In some embodiments, the display module 503 in FIG. 5 displays the completed color three-dimensional map modified by one or a combination of several of modification modes, wherein the modification modes includes:
manually setting a color for the completed color three-dimensional map, or automatically setting a color for the completed color three-dimensional map based on a preset color scheme;
generating a decal using a preset pattern or a custom pattern, and displaying the decal in the completed color three-dimensional map;
adding a navigable region, a non-navigable region or a virtual wall for the robot to the completed color three-dimensional map, and displaying the navigable region, the non-navigable region or the virtual wall in the completed color three-dimensional map;
setting an automatically time-varying color scheme for the completed color three-dimensional map according to preset color schemes corresponding to different times, such that all or some of the regions in the completed color three-dimensional map automatically change in color according to the color scheme; and
setting a camera trajectory in the completed color three-dimensional map or employing a motion trajectory of the robot, rendering the completed color three-dimensional map according to a pose and an intrinsic parameter of the camera on the camera trajectory or on the motion trajectory to obtain two-dimensional images rendered based on the trajectory, and playing the two-dimensional images sequentially.

In some embodiments, the display module 503 in FIG. 5 displays the completed color three-dimensional map in two dimensions based on a preset plane of section or a user-defined plane of section.

It should be understood that the size of the sequence numbers of the steps in the above embodiments does not imply the execution order. The execution order of each process should be determined by its function and internal logic, and should not impose any limitation on the implementation process of the embodiments of the present disclosure.

Figure 6 is a schematic diagram of the structure of an electronic device 6 provided by an embodiment of the present disclosure. As shown in Figure 6, the electronic device 6 of this embodiment includes: a processor 601 and a memory 602. The memory 602 is configured to store a computer program 603 that can be executed by the processor 601. When the processor 601 executes the computer program 603, it implements the steps of the aforementioned method embodiments. Alternatively, the processor 601 executes the computer program 603 to implement the functions of the modules/units in the aforementioned device embodiments.

Illustratively, the computer program 603 can be divided into one or more modules/units, which are stored in the memory 602 and executed by the processor 601 to accomplish the present disclosure. The one or more modules/units can be a series of computer program instruction segments capable of performing specific functions, and these instruction segments are configured to describe the execution process of the computer program 603 in the electronic device 6.

The electronic device 6 can be a desktop computer, notebook, handheld computer, cloud server, or other electronic devices. The electronic device 6 may include, but is not limited to, the processor 601 and the memory 602. Those skilled in the art will understand that Figure 6 is merely an example of the electronic device 6 and does not limit its structure. The electronic device 6 can include more or fewer components than those shown, or combine certain components, or include different components, such as input/output devices, network access devices, buses, and so on.

The processor 601 can be a Central Processing Unit (Central Processing Unit, CPU), or it can be other general-purpose processors, a Digital Signal Processor (Digital Signal Processor, DSP), an Application-Specific Integrated Circuit (Application-Specific Integrated Circuit, ASIC), a Field-Programmable Gate Array (Field-Programmable Gate Array, FPGA), or other programmable logic devices, a discrete gate or a transistor logic device, a discrete hardware component, etc. The general-purpose processor can be a microprocessor, or the processor can also be any conventional processor.

The memory 602 can be an internal storage unit of the electronic device 6, such as the hard disk or memory of the electronic device 6. The memory 602 can also be an external storage device of the electronic device 6, such as a plug-in hard disk equipped on the electronic device 6, a Smart Media Card (Smart Media Card, SMC), a Secure Digital (Secure Digital, SD) card, a Flash Card (Flash Card), and so on. Furthermore, the memory 602 can also include both the internal storage unit and external storage devices of the electronic device 6. The memory 602 is configured o store the computer program as well as other programs and data required by the electronic device. The memory 602 can also be configured to temporarily store data that has been output or is about to be output.

Those of ordinary skill in the art can clearly understand that for the sake of convenience and conciseness in description, only division of all the above functional units or modules is taken as an example for explanation. In practice, the above functions may be allocated by different functional units or modules as required. That is, the internal structure of the apparatus is divided into different functional units or modules to accomplish all or part of the functions described above. All functional units or modules in the embodiments can be integrated into one processing unit; or each unit exists physically independently; or two or more units may be integrated into one unit. The above integrated units may be implemented in the form of hardware or a software functional unit. In addition, the specific names of the various functional units or modules are only for facilitating distinguishing them from each other, and are not intended to limit the protection scope of the present disclosure. The specific work processes of the above units or modules in the above system may refer to corresponding processes in the above method embodiment and are not repeated herein.

In the above embodiments, the description of each embodiment has its own emphasis. The parts that are not detailed or described in certain embodiment may refer to related description of other embodiments.

It should be appreciated by those of ordinary skill in the art that units and algorithm steps of various examples described in conjunction with the embodiments disclosed herein may be implemented as electronic hardware, or a combination of computer software and electronic hardware. Whether these functions are implemented as hardware or software depends on particular application and design constraints of the technical solutions. A person skilled in the art may implement the described functions with different methods for each of particular applications, but such implementation shall not be regarded as going beyond the scope of the present disclosure.

In the embodiments provided by the present disclosure, it should be understood that the disclosed apparatus/computer device and method may be implemented by other means. For example, the apparatus/computer device embodiments described above are merely schematic. For example, the division of the modules or units may be a logical functional division. There may be other division modes during actual implementation. For example, multiple units or components may be combined or integrated into another system, or some features may be ignored or not executed. In addition, mutual coupling or direct coupling or communication connection that is shown or discussed may be indirect coupling or communication connection through some interfaces, apparatuses or units; or may be in electrical, mechanical or other forms.

The units described as separated components may be or may not be physically separated. The components displayed as units may be or may not be physical units, that is, may be located in one place or may be distributed on a plurality of network units. Part or all of the units may be selected according to actual needs to achieve the purposes of the solutions of the embodiments.

In addition, all functional units in the embodiments of the present disclosure may be integrated into one processing unit; or, each unit exists physically independently; or two or more units may be integrated into one unit. The above integrated units may be implemented in the form of hardware or software functional units.

The integrated modules/units, if implemented in the form of the software functional units and sold or used as independent products, may be stored in a computer-readable storage medium. Based on this understanding, all or part of the processes for implementing the method of the above embodiment of the present disclosure may also be completed by instructing relevant hardware through a computer program. The computer program may be stored in a computer-readable storage medium, and when the computer program is executed by a processor, the steps of the above various method embodiments can be implemented. The computer program includes a computer program code, and the computer program code may be in the form of a source code, an object code and an executable file or some intermediate form, and the like. The computer-readable medium may include: any entity or apparatus capable of carrying the computer program code, a recording medium, a USB disk, a mobile hard disk, a magnetic disk, an optical disk, a computer memory, a Read-only Memory (Read-only Memory, ROM), a Random Access Memory (Random Access Memory, RAM), an electrical carrier signal, a telecommunication signal and a software distribution medium, etc. It should be noted that the content contained in the computer-readable medium may be appropriately increased or decreased according to the requirements of legislation and patent practice in the jurisdiction. For example, in some jurisdictions, according to the legislation and patent practice, the computer-readable medium does not include electrical carrier signals and telecommunication signals.

The above embodiments are only intended to describe the technical solutions of the present disclosure and are not intended to limit the present disclosure. Although the present disclosure is described in detail with reference to the foregoing embodiments, it may be understood by those of ordinary skill in the art that they can still make modifications to the technical solutions disclosed in the above various embodiments or equivalent replacements on part of technical features, and these modifications or replacements do not depart the nature of the corresponding technical solution from the spirit and scope of the technical solutions of the various embodiments of the present disclosure and should be included within the protection scope of the present disclosure.

## Claims

1. A method for displaying a color three-dimensional map, comprising:
acquiring initial color three-dimensional map information of a space where a robot is located, wherein the space where the robot is located represents a space corresponding to a region detectable by a robot sensor;
completing the color three-dimensional map based on the initial color three-dimensional map information to perform inference-based completion on structural and color information of a region undetected by the robot sensor; and
displaying the completed color three-dimensional map obtained after the completing.

2. The method according to claim 1, wherein the initial color three-dimensional map information comprises: an initial color three-dimensional map of the space where the robot is located and/or information required for reconstructing the initial color three-dimensional map of the space where the robot is located.

3. The method according to claim 2, wherein acquiring the information required for reconstructing the initial color three-dimensional map of the space where the robot is located comprises:
acquiring an RGB image taken by the robot using an RGB camera, and acquiring pose information corresponding to the RGB camera;
or, acquiring an RGB image taken by the robot using an RGB camera and acquiring pose information corresponding to the RGB camera, and acquiring a depth image taken by using a depth camera and pose information corresponding to the depth camera;
or, acquiring an RGB image taken by the robot using an RGB camera and acquiring pose information corresponding to the RGB camera, and acquiring point cloud information measured by a radar and pose information corresponding to the radar.

4. The method according to claim 3, wherein completing the color three-dimensional map based on the information required for reconstructing the initial color three-dimensional map of the space where the robot is located comprises:
processing, by using a pre-configured first completion algorithm model, the information required for reconstructing the initial color three-dimensional map of the space where the robot is located to perform inference-based completion on the structural and color information of the region undetected by the robot sensor, and rendering a three-dimensional scene after the inference-based completion to obtain the completed color three-dimensional map.

5. The method according to claim 2, wherein acquiring the initial color three-dimensional map of the space where the robot is located comprises:
acquiring an RGB image sequence consisting of RGB images taken by the robot using an RGB camera, and determining pose information corresponding to the RGB camera mounted in the robot; and
reconstructing the initial color three-dimensional map of the space where the robot is located based on the RGB image sequence and the pose information.

6. The method according to claim 2, wherein acquiring the initial color three-dimensional map of the space where the robot is located comprises:
acquiring an RGB image sequence consisting of RGB images taken by the robot using an RGB camera, determining pose information corresponding to the RGB camera mounted in the robot, and acquiring at least one of a depth image, point cloud information, accelerometer-collected information, and gyroscope-collected information, to reconstruct the initial color three-dimensional map of the space where the robot is located.

7. The method according to claim 5 or 6, wherein completing the color three-dimensional map based on the initial color three-dimensional map of the space where the robot is located comprises:
processing, by using a pre-configured second completion algorithm model, the reconstructed initial color three-dimensional map to perform completion and inference on the structural and color information of the region undetected by the robot sensor, and obtaining the completed color three-dimensional map.

8. The method according to any one of claims 1 to 7, wherein the completed color three-dimensional map comprises structural and color information corresponding to the initial color three-dimensional map, and structural and color information in the region undetected by the robot sensor.

9. The method according to any one of claims 1 to 8, further comprising:
performing regional segmentation on elements in the completed color three-dimensional map such that different regions after segmentation each comprise an object, a category of objects or several categories of objects, assigning category labels to objects in the different regions to obtain object category information in the completed color three-dimensional map, and coloring elements in the different regions to obtain colors corresponding to the objects in the different regions in the completed color three-dimensional map.

10. The method according to any one of claims 1 to 9, further comprising:
integrating a three-dimensional model of the robot in the completed color three-dimensional map based on position and orientation information of the robot, and displaying the three-dimensional model of the robot and the completed color three-dimensional map at a consistent scale.

11. The method according to any one of claims 1 to 10, further comprising displaying the completed color three-dimensional map modified by one or a combination of several of modification modes, wherein the modification modes comprise:
manually setting a color for the completed color three-dimensional map, or automatically setting a color for the completed color three-dimensional map based on a preset color scheme;
generating a decal using a preset pattern or a custom pattern, and displaying the decal in the completed color three-dimensional map;
adding a navigable region, a non-navigable region or a virtual wall for the robot to the completed color three-dimensional map, and displaying the navigable region, the non-navigable region or the virtual wall in the completed color three-dimensional map;
setting an automatically time-varying color scheme for the completed color three-dimensional map according to preset color schemes corresponding to different times, such that all or some of the regions in the completed color three-dimensional map automatically change in color according to the color scheme; and
setting a camera trajectory in the completed color three-dimensional map or employing a motion trajectory of the robot, rendering the completed color three-dimensional map according to a pose and an intrinsic parameter of the camera on the camera trajectory or on the motion trajectory to obtain two-dimensional images rendered based on the trajectory, and playing the two-dimensional images sequentially.

12. The method according to any one of claims 1 to 11, further comprising:
displaying the completed color three-dimensional map in two dimensions based on a preset or user-defined plane of section.

13. An apparatus for displaying a color three-dimensional map, comprising:
an acquisition module, configured to acquire initial color three-dimensional map information of a space where a robot is located, wherein the space where the robot is located represents a space corresponding to a region detectable by a robot sensor;
a completion module, configured to complete the color three-dimensional map based on the initial color three-dimensional map information to perform inference-based completion on structural and color information of a region undetected by the robot sensor; and
a display module, configured to display the completed color three-dimensional map obtained after the completing.

14. The apparatus according to claim 13, wherein the initial color three-dimensional map information comprises: an initial color three-dimensional map of the space where the robot is located and/or information required for reconstructing the initial color three-dimensional map of the space where the robot is located.

15. The apparatus according to claim 14, wherein acquiring, by the acquisition module, the information required for reconstructing the initial color three-dimensional map of the space where the robot is located comprises:
acquiring an RGB image taken by the robot using an RGB camera, and acquiring pose information corresponding to the RGB camera;
or, acquiring an RGB image taken by the robot using an RGB camera and acquiring pose information corresponding to the RGB camera, and acquiring a depth image taken by using a depth camera and pose information corresponding to the depth camera;
or, acquiring an RGB image taken by the robot using an RGB camera and acquiring pose information corresponding to the RGB camera, and acquiring point cloud information measured by a radar and pose information corresponding to the radar.

16. The apparatus according to claim 15, wherein completing, by the completion module, the color three-dimensional map based on the information required for reconstructing the initial color three-dimensional map of the space where the robot is located comprises:
processing, by using a pre-configured first completion algorithm model, the information required for reconstructing the initial color three-dimensional map of the space where the robot is located to perform inference-based completion on the structural and color information of the region undetected by the robot sensor, and rendering a three-dimensional scene after the inference-based completion to obtain the completed color three-dimensional map.

17. The apparatus according to claim 14, wherein acquiring, by the acquisition module, the initial color three-dimensional map of the space where the robot is located comprises:
acquiring an RGB image sequence consisting of RGB images taken by the robot using an RGB camera, and determining pose information corresponding to the RGB camera mounted in the robot; and
reconstructing the initial color three-dimensional map of the space where the robot is located based on the RGB image sequence and the pose information.

18. The apparatus according to claim 14, wherein acquiring, by the acquisition module, the initial color three-dimensional map of the space where the robot is located comprises:
acquiring an RGB image sequence consisting of RGB images taken by the robot using an RGB camera, determining pose information corresponding to the RGB camera mounted in the robot, and acquiring at least one of a depth image, point cloud information, accelerometer-collected information, and gyroscope-collected information, to reconstruct the initial color three-dimensional map of the space where the robot is located.

19. The apparatus according to claim 17 or 18, wherein completing, by the completion module, the color three-dimensional map based on the initial color three-dimensional map of the space where the robot is located comprises:
processing, by using a pre-configured second completion algorithm model, the reconstructed initial color three-dimensional map to perform completion and inference on the structural and color information of the region undetected by the robot sensor, and obtaining the completed color three-dimensional map.

20. The apparatus according to any one of claims 13 to 19, wherein the completed color three-dimensional map comprises structural and color information corresponding to the initial color three-dimensional map, and structural and color information in the region undetected by the robot sensor.

21. The apparatus according to any one of claims 13 to 20, wherein the display module performs regional segmentation on elements in the completed color three-dimensional map such that different regions after segmentation each comprise an object, a category of objects or several categories of objects, assigns category labels to objects in the different regions to obtain object category information in the completed color three-dimensional map, and performs coloring on elements in the different regions to obtain colors corresponding to the objects in the different regions in the completed color three-dimensional map.

22. The apparatus according to any one of claims 13 to 21, wherein the display module integrates a three-dimensional model of the robot in the completed color three-dimensional map based on position and orientation information of the robot, and displays the three-dimensional model of the robot and the completed color three-dimensional map at a consistent scale.

23. The apparatus according to any one of claims 13 to 22, wherein the display module displays the completed color three-dimensional map modified by one or a combination of several of modification modes, and the modification modes comprise:
manually setting a color for the completed color three-dimensional map, or automatically setting a color for the completed color three-dimensional map based on a preset color scheme;
generating a decal using a preset pattern or a custom pattern, and displaying the decal in the completed color three-dimensional map;
adding a navigable region, a non-navigable region or a virtual wall for the robot to the completed color three-dimensional map, and displaying the navigable region, the non-navigable region or the virtual wall in the completed color three-dimensional map;
setting an automatically time-varying color scheme for the completed color three-dimensional map according to preset color schemes corresponding to different times, such that all or some of the regions in the completed color three-dimensional map automatically change in color according to the color scheme; and
setting a camera trajectory in the completed color three-dimensional map or employing a motion trajectory of the robot, rendering the completed color three-dimensional map according to a pose and an intrinsic parameter of the camera on the camera trajectory or on the motion trajectory to obtain two-dimensional images rendered based on the trajectory, and playing the two-dimensional images sequentially.

24. The apparatus according to any one of claims 13 to 23, wherein the display module displays the completed color three-dimensional map in two dimensions based on a preset plane of section or a user-defined plane of section.

25. An electronic device, comprising: a processor, and a memory for storing a computer program, wherein the computer program, when executed by the processor, implements the method of any one of claims 1 to 12.

26. A computer-readable storage medium storing a computer program, wherein the computer program, when executed by a processor, implements the method of any one of claims 1 to 12.
